# EUROPÄISCHE PATENTSCHRIFT

(11) **EP 1 090 218 B1**
(45) Veröffentlichungstag und Bekanntmachung des Hinweises auf die Patenterteilung: **10.09.2003**
(21) Anmeldenummer: 99938188.2
(22) Anmeldetag: 12.06.1999
(51) Int. Cl.: F02D 9/10, F16K 1/226

(54) **EIN VENTILKÖRPER**
VALVE BODY
CORPS DE SOUPAPE

(30) Priorität: 23.06.1998 AU PP429298; 12.05.1999 AU 2808999
(43) Veröffentlichungstag der Anmeldung: 11.04.2001
(73) Patentinhaber: ROBERT BOSCH GMBH, 70442 Stuttgart (DE)
(72) Erfinder: FRANZKE, Klaus, Clayton, VIC 3169 (AU); BUDI, Tan, Endeauvour Hills, VIC 3802 (AU)
(86) Internationale Anmeldenummer: DE9901728
(87) Internationale Veröffentlichungsnummer: WO99067520

(56) Entgegenhaltungen:
- EP-A- 0 494 344
- DE-A- 19 508 355
- FR-A- 1 127 961
- US-A- 4 344 396
- US-A- 5 035 214
- US-A- 5 081 972
- PATENT ABSTRACTS OF JAPAN vol. 1999, no. 09, 30. Juli 1999 (1999-07-30) & JP 11 101137 A (AISAN IND CO LTD), 13. April 1999 (1999-04-13)

## Beschreibung

Die vorliegende Erfindung bezieht sich auf einen Ventilkörper und ist besonders zweckdienlich für einen Drosselkörper mit einem Drosselklappenventil.

Derzeit bestehende Drosselkörper für Kraftstoffeinspritzsysteme haben eine Lufteinlaßbohrung, welche ein Drosselklappenventil einschließt. Das Drosselklappenventil reguliert den Lufteintritt in das System. Wenn das Ventil geschlossen ist, liegt die Klappe des Ventils mit ihrer Kante an der Wandung der Bohrung an, und zwar auf solche Weise, daß sie mehr oder weniger an die Wand anstößt.

Es ist immer erforderlich gewesen, daß ein wenig Luft durch das Ventil in das Kraftstoffeinspritzsystem geführt wird, wenn ein Fahrzeug im Stillstand ist, um den Leerlauf des Fahrzeugmotors zu ermöglichen. Dieses Erfordernis hat sich mit der Zeit mehr und mehr erübrigt, und zwar in solchem Maß, daß die Kante der Ventilklappe mit dem Durchmesser der Bohrung eng übereinstimmt, wodurch sich das Problem ergibt, daß die Klappe sich festklemmt. Unerwünschte Luftundichtigkeit ist ein weiteres Problem bei bestehenden Drosselkörpern.

Um diese zwei Probleme zu bewältigen, ist akkurates maschinelles Bearbeiten der Bohrung und der Klappe erforderlich, damit diese übereinstimmen, und in der Vergangenheit ist die Wandung der Bohrung mit einem viskosen Material, wie z.B. Molybond™, hergestellt von Molybond Laboratories, beschichtet worden, um ein Festklemmen der Klappe sowie Luftundichtigkeit zu verhindern. Das Material ist jedoch teuer, sowie unangenehm und beschwerlich aufzutragen. Es ist daher wünschenswert, eine zweckdienliche Alternative oder einen Ventilkörper bereitzustellen, welcher ein Auftragen eines viskosen Materials wie z.B. Molybond™ nicht erfordert.

Die EP 0 494 344 A1 zeigt ein Dichtsystem für eine Drosselklappekonstruktion. Bei diesem Dichtsystem ist am Umfang einer Drosselklappe eine Dichtung aus elastischem Werkstoff angebracht. Der elastische Werkstoff dient zum Abdichten, wenn die Drosselklappe in Schließstellung steht. Weil sich die Dichtung bei jedem Schließ- und Öffnungsvorgang verformt, muß mit Verschleiß gerechnet werden und es muß bei jedem Schließ- und Öffnungsvorgang für das Verformen der Dichtung Kraft aufgewendet werden. Ein weiterer Nachteil ist, daß aufgrund der Elastizität der Dichtung die Stellung, in der die Drosselklappe den Kanal öffnet, nicht präzise bestimmt ist und sich im Laufe der Zeit verändern kann.

Erfindungsgemäß wird ein Ventilkörper vorgeschlagen, welcher eine Einlaßbohrung und ein Ventil in der Bohrung einschließt, welches eine Ventilklappe mit einer Kante aufweist, die der Wandung der Bohrung anliegend verschiebbar ist, wobei zumindest die Kante der Klappe mit Zinn beschichtet ist, das die Wandung anstößt, wenn die Kante an der Wandung anliegt.

Bevorzugterweise wird die Klappe in einem Verfahren beschichtet, welches eine Vielzahl von Klappen beschichtet.

Vorteilhafterweise kann der Ventilkörper ein Drosselkörper mit einer Lufteinlaßbohrung sein.

Eine bevorzugte Realisierung der vorliegenden Erfindung wird nachfolgend nur als Beispiel mit Bezug auf die begleitenden Zeichnungen beschrieben, worin:
Figur 1 eine Querschnittdarstellung einer bevorzugten Realisierung eines Drosselkörpers ist; und
Figur 2 eine detaillierte Darstellung des in Figur 1 mit X markierten Ausschnitts zeigt.

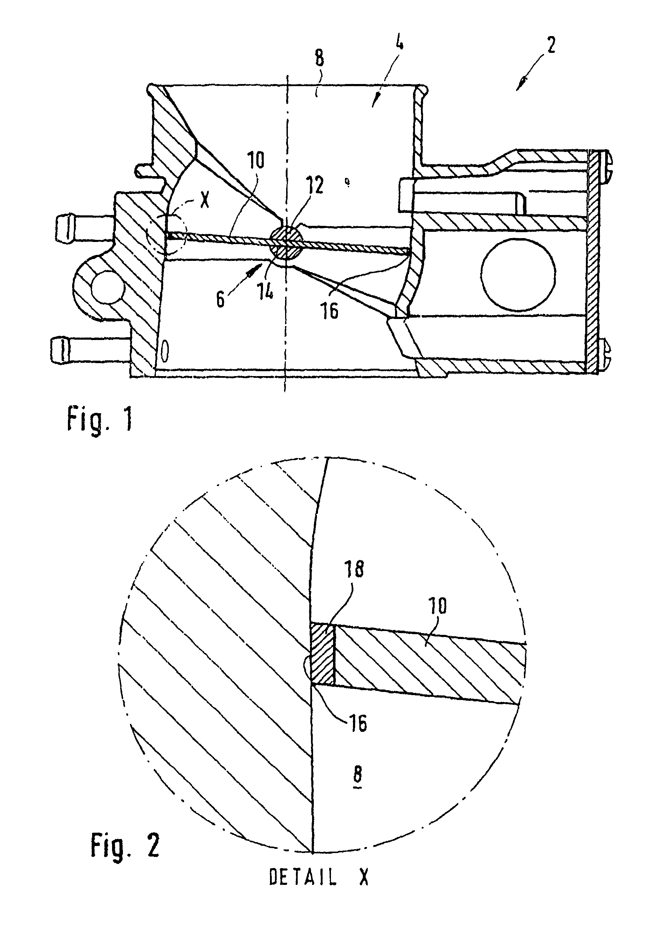

Ein Drosselkörper 2, wie in Figuren 1 und 2 dargestellt, besitzt eine Lufteinlaßbohrung 4, die durch Verschieben eines Drosselklappenventils 6 geöffnet und geschlossen werden kann, so daß der Luftstrom in das Kraftstoffeinspritzsystem eines Fahrzeugs reguliert werden kann. Die Bohrung 4 ist zylindrischer Form und hat eine Innenwandung 8. Das Ventil 6 schließt eine kreisförmige Scheibe 10 ein, welche als Klappe dient und in einem Schlitz 14 eines drehbaren Schaftes 12 gehalten wird. Gegenüberliegende Enden des Schaftes 12 des Ventils 6 erstrecken sich in die Wandung 8, und der Schaft 12 wird durch eine Lagerung gestützt. Wenn das Ventil 6 geschlossen ist, so liegt die Seite oder Kante 16 der Klappe 10 an der Wandung 8 an, wobei die Lufteinlaßbohrung 4 verschlossen wird. Die Klappe 10 ist aus biegesteifem Blech, wie z.B. Messing oder Aluminium, hergestellt.

Um Luftundichtigkeit und Festklemmen der Kante 16 an der Wandung 8 zu verhindern, ist die Klappe 10 mit einem deformierbaren Material 18, z.B. Zinn, beschichtet. Zumindest die Kante oder Seite 16 muß mit dem Material 18 beschichtet sein, aber gegebenenfalls kann die gesamte Klappe 10 mit dem Material 18 beschichtet werden. Das Material 18 muß genügend weich und deformierbar sein, damit es sich dem Profil der Wandung 8 anpaßt, wenn die Klappe 10 verschoben wird. Das Material 18 muß der Klappe 10 freie Bewegung ermöglichen, während sie gleichzeitig bündig sitzt und an die Wand 8, wie in Figur 2 dargestellt, anstößt, um Luftundichtigkeit zu vermeiden.

Die Beschichtung der Klappe 10, wie oben beschrieben, bietet beachtliche Vorteile gegenüber der Verwendung von viskosem Material, wie z.B. Molybond™. Die Beschichtung der Klappe 10 ist bedeutend billiger, hinterläßt keine unerwünschten Reste, und da das Material 18 sich der Form der Wandung 8 anpaßt, ist ein präzises und akkurates maschinelles Bearbeiten der Einlaßbohrung zur Übereinstimmung mit der Form der Klappe 10 nicht länger erforderlich. Die Herstellungskosten des Drosselkörpers 2 werden dabei reduziert.

Die Beschichtung der Klappe 10 mit einem Material 18 kann entweder einzeln oder in Gruppen erfolgen. Bei einer Gruppenbeschichtung kann eine Anzahl von Klappen 10 übereinandergestapelt und dann beschichtet werden, wobei im wesentlichen nur die Kanten 16 der Klappen 10 mit dem Material 18 beschichtet werden. Das gruppenweise Beschichten der Klappen 10 reduziert die Kosten noch weiter.
Eine Vielzahl von Änderungen und Abwandlungen werden dem Fachkundigen gegenwärtig sein, ohne von dem Sinn oder Umfang der anhand der beiliegenden Zeichnung beschriebenen Erfindung abzuweichen.

Die Bezugsnummern in den folgenden Ansprüchen sind nicht als Beschränkungen auszulegen.

## Patentansprüche

1. Ein Ventilkörper (2) einschließlich einer Einlaßbohrung (4) und eines Ventils (6) in der Bohrung (4), welches eine Ventilklappe (10) mit einer Kante (16) aufweist, welche an der Wandung (8) der Bohrung (4) anliegend verschiebbar ist, wobei zumindest die Kante (16) der Klappe (10) mit Zinn (18) beschichtet ist, welches an die Wandung (8) anstößt, wenn die Kante (16) an der Wandung (8) anliegt.

2. Ein Ventilkörper (2) gemäß Anspruch 1, wobei das Zinn (18) sich dem Profil der Wandung (8) anpaßt, wenn die Klappe (10) verschoben wird.

3. Ein Ventilkörper (2) gemäß Anspruch 2, wobei die Klappe (10) frei schwenkbar ist, während die Kante (16) mit der Wandung (8) bündig ist.

4. Ein Ventilkörper (2) gemäß einem der vorangehenden Ansprüche, wobei die Klappe (10) in einem Prozeß, der die Beschichtung einer Vielzahl von Klappen einschließt, mit dem Zinn (18) beschichtet wird.

5. Ein Ventilkörper (2) gemäß einem der vorangehenden Ansprüche, wobei der Körper (2) ein Drosselkörper (2) ist und die Bohrung (4) eine Lufteinlaßbohrung (4) ist.

6. Ein Kraftstoffeinspritzsystem einschließlich eines Ventilkörpers (2) gemäß Anspruch 5.

7. Ein Fahrzeugmotor einschließlich eines Kraftstoffeinspritzsystems gemäß Anspruch 6.

8. Ein Fahrzeug einschließlich eines Fahrzeugmotors gemäß Anspruch 7.

## Claims

1. A valve body (2) including an inlet bore (4) and a valve (6) in the bore (4), the said valve having a valve flap (10) with an edge (16) which can be displaced in a manner bearing against the wall (8) of the bore (4), at least the edge (16) of the flap (10) being coated with tin (18) which butts against the wall (8) when the edge (16) bears against the wall (8).

2. A valve body (2) according to Claim 1, the tin (18) adapting itself to the profile of the wall (8) when the flap (10) is displaced.

3. A valve body (2) according to Claim 2, it being possible for the flap (10) to pivot freely while the edge (16) is flush with the wall (8).

4. A valve body (2) according to one of the preceding claims, the flap (10) being coated with the tin (18) in a process which includes the coating of a multiplicity of flaps.

5. A valve body (2) according to one of the preceding claims, the body (2) being a throttle body (2) and the bore (4) being an air inlet bore (4).

6. A fuel injection system including a valve body (2) according to Claim 5.

7. A vehicle engine including a fuel injection system according to Claim 6.

8. A vehicle including a vehicle engine according to Claim 7.

## Revendications

1. Corps de soupape (2), y compris un alésage d'admission (4) et une soupape (6) dans l'alésage (4), qui présente un clapet de soupape (10) avec une arête (16) qui peut être déplacée de manière limitée sur la paroi (8) de l'alésage (4), au moins l'arête (16) du clapet (10) étant recouverte d'étain (18) qui se heurte à la paroi (8) lorsque l'arête (16) est contre la paroi (8).

2. Corps de soupape (2) selon la revendication 1,
dans lequel
l'étain (18) s'adapte au profil de la paroi (8) en déplaçant le clapet (10).

3. Corps de soupape (2) selon la revendication 2,
dans lequel
le clapet (10) peut balancer librement pendant que l'arête (16) affleure la paroi (8).

4. Corps de soupape (2) selon l'une des revendications précédentes,
dans lequel
le clapet (10) est recouvert d'étain (18) au cours d'un procédé comprenant le revêtement d'un grand nombre de clapets.

5. Corps de soupape (2) selon l'une des revendications précédentes,
dans lequel
le corps (2) est un dispositif d'étranglement (2) et l'alésage (4) est un alésage d'entrée d'air (4).

6. Système d'injection de carburant, comprenant un corps de soupape (2), selon la revendication 5.

7. Moteur d'automobile, comprenant un système d'injection de carburant, selon la revendication 6.

8. Véhicule comprenant un moteur d'automobile selon la revendication 7.
